# EUROPEAN PATENT APPLICATION

(11) **EP 0 732 649 A2**
(43) Date of publication of application: **18.09.1996**
(21) Application number: 96420071.1
(22) Date of filing: 06.03.1996
(51) Int. Cl.: G06F 9/445

(54) **Computer files for multi-vendor and multi-architecture execution**

(30) Priority: 15.03.1995 US 404805
(71) Applicant: EASTMAN KODAK COMPANY, Rochester, New York 14650-2201 (US)
(72) Inventor: Sloey, James, c/o Eastman Kodak Co., Rochester, New York 14650-2201 (US); Moore, Annette L., c/o Eastman Kodak Co., Rochester, New York 14650-2201 (US)
(74) Representative: Buff, Michel

(57) **Abstract**

A computer executable file is able to execute on computer systems having different processors and different operating systems, by using existing capabilities of operating systems and differences between processors. When it is desired to create a file that can be executed on both an APPLE MACINTOSH and a non-MACINTOSH personal computer, all of the resources used by the MACINTOSH are stored in the resource fork of an APPLE MACINTOSH file and a program executable on one or more other computer systems is moved into the data fork. The resource fork may include resources to permit the program to be executed on both MOTOROLA 680x0 and 60x processors or, either type of processor alone. The non-MACINTOSH program may be executable by more than one non-MACINTOSH computer system by including at the beginning of the file codes which are executed by a first processor to branch to a program for that processor and are executed by a second processor in such a manner that the second processor is not adversely affected. The file moved into the data fork would, of course, itself be executable on more than one non-MACINTOSH computer system.

## Description

### BACKGROUND OF THE INVENTION

### Field of the Invention

The present invention relates to execution of computer files by a processor in a computer system executing under control of an operating system and, more particularly, to computer files which are executable on different computer systems having different processors and running different operating systems, without emulation.

### Description of the Related Art

Throughout virtually all of the history of computers, there have been multiple models of computers with similar capabilities, but which are unable to operate programs written for each other. At the present time, the most common general purpose computers are in the class referred to as personal computers or workstations. The most common computer systems of this type currently in use are the IBM PC, APPLE MACINTOSH, SUN workstation and machines compatible with these three. These three types use completely different operating systems and several processors. Programs can be written that are executable on all of the processors of the IBM PC systems (INTEL 8x86, or PENTIUM). However, the processors used by the other two classes of machines are not as easily made commonly executable.

The APPLE MACINTOSH has one group of processors (MOTOROLA 680x0) for which commonly executable code can be written and another group of processors (MOTOROLA 60x) which are unable to execute programs executable on the other group of processors, unless emulation is used. This latter group of processors is used in the PowerPC MACINTOSH machines. A similar situation exists with respect to SUN workstations, some of which use the MOTOROLA 680x0 processors and others of which use SPARC processors. The PowerPC MACINTOSH and SUN workstations both execute operating systems which are able to detect the appropriate code to be used by their processors. As a result, it is possible to create a computer executable file that can execute on any MACINTOSH or PowerPC MACINTOSH and similarly it is possible to create a computer executable file that can run on any SUN workstation in the "native mode" of the processors in those systems, that is, without emulation.

The only known way to execute a program written for one of the three classes of machines on a different class is to use emulation. For example, it is now possible for a MACINTOSH to execute a program written for an IBM PC. However, this method of execution is highly inefficient, requiring a large amount of overhead and is not universally available. For example, IBM PCs are unable to execute programs written for a SUN workstation.

The existing nonstandardization among personal computers causes many problems for developers of software. Not only are there basic differences in the processors of personal computers, but there are also different operating systems and graphical user interfaces (GUIs) for each class of personal computer. The IBM PC may have the most compatible processors, but this class of personal computer has the least compatibility in their operating systems and GUIs. while all or virtually all SUN and APPLE computers use operating systems from the manufacturer of the computer, i.e., SUN or APPLE, there have been several vendors of operating systems for the IBM PC and at least three vendors of GUIs. As a result, developers of software have been forced to either select only a single processor/operating system combination for which to develop software, or to support multiple processors, multiple operating systems, or both, by maintaining different versions of the software for different processor/operating system combinations. Due to the high competitiveness and rapid change in the industry, developers typically are constantly changing their own software and at the same time the most popular processor/operating system combination changes, further increasing the number of changes that must be made to remain competitive.

Some areas of standardization or common operation exist throughout the computer industry. This makes it possible for computer files to be shared between different classes of personal computers. The first area of standardization or commonality is that all of these machines at the lowest level use binary digits to represent data and programs. Very few digital computers have ever been created which use tertiary or higher order digits. More importantly, there is common standardization on the eight-bit byte and the ability to access data stored in the American Standard Code for Information Interchange (ASCII) format. In addition, there has been sufficient standardization of the size of magnetic and optical disks that it is possible to store a computer file on one class of machine and retrieve the file on another class of machine. In CD-ROMs, the standard used is ISO 9660. Communication programs also exist so that files can be transferred via communication lines, particularly serial communication, such as telephone lines using wired or wireless communication. Files may be transferred from one class of machine to another, not only within the personal computer class, but also other classes of general purpose computers, such as mini computers and mainframe computers.

As described in the preceding paragraph, it is possible to move a computer readable file from one class of machine to another. However, once the file has been transferred to a different class of machine, the file can be read, but normally cannot be executed. As a result, not only must software developers maintain a large number of files which perform the same functions on different processor/operating system combinations, but also must distribute the programs on different disks for each processor/operating system combination. Thus, the consumer is presented with a large number of packages which contain essentially the same product from a single software developer and differ only in the processor/operating system combination on which the product can be used.

In some cases, a single ISO 9660 CD-ROM may contain programs for more than one processor/operating system combination, but some mechanism must still be used to identify which programs are to be executed by which computers. A similar situation exists in the case of accessing programs via communication lines. File(s) must be made available for all supported processor/operating system combinations and then the appropriate file(s) must be selected for each computer system.

One known method for simplifying the selection process with respect to CD-ROMs is disclosed in U.S. Patent 5,359,725 to Garcia et al. This technique only works on ISO 9660 CD-ROMs due to unique features in this standard. Different files for each processor/operating system exist on a CD-ROM and according to this technique, only the directory structure is modified to help identify the appropriate files for each processor/operating system combination.

### SUMMARY OF THE INVENTION

It is an object of the present invention to provide a single computer file which is executable on different processor/operating system combinations without using emulation.

It is another object of the present invention to provide a computer executable file which is not dependent on the media used to store the file to enable the file to be executed on different processor/operating system combinations.

It is also an object of the present invention to provide a multi-architecture computer executable file that can be transmitted over telephone lines and executed in receiving computer systems having different processor/operating systems.

The above objects are accomplished by providing a single computer executable file and associated directory entry, for execution by first and second processors, different from each other, operating under control of first and second operating systems, respectively, each accessing files differently. The single computer executable file includes a first program executable by the first processor under control of the first operating system and a second program executable by the second processor under control of the second operating system. The single computer executable file and associated directory entry also include program locator to cause the first processor to execute the first program and the second processor to execute the second program.

When one of the operating systems separately identifies different portions of a computer executable file, the program locator can be in the directory entry, so that operating system can supply the second program in the computer executable file to the second processor. For example, the operating systems of the APPLE MACINTOSH and PowerPC MACINTOSH create computer executable files having an initial portion referred to as a data fork and a subsequent portion referred to as a resource fork. According to the present invention a file can be provided capable of executing on a 680x0 MACINTOSH or PowerPC MACINTOSH and either a SUN workstation or an IBM PC compatible computer by storing the MACINTOSH program in the resource fork and the other program in the data fork.

A file executable on a MACINTOSH and a SUN or IBM PC may be created by combining two files containing executable code for different processors. A first program is stored in a first file, the first program executable by a first processor under control of a first operating system which may be the processor and operating system of a SUN workstation or an IBM PC class computer. A second program is stored in a second file, the second program executable by a second processor under control of the second operating system which may be an APPLE MACINTOSH or PowerPC MACINTOSH computer operating under the operating systems that as described above, will include initial and subsequent portions in the second file. If the second file is executable by a PowerPC MACINTOSH, each of the initial and subsequent portions of the second file will contain segments of a program executable by a PowerPC MACINTOSH. In this case, the next step is to move all segments of the program in the initial portion of the second file into the subsequent portion of the second file.

Once this is done, the file stored by the first processor operating under control of the first operating system can be moved into the initial portion of the second file. The first file can be transferred from the computer system which created the first file using any known method, including serial communications with or without using telephone lines, transfer of a disk accessible by both computer systems, or by sharing a common memory device in a single computer system containing both processors operating under different operating systems, etc.

The above objects together with other objects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

In the Detailed Description of the Preferred Embodiments of the Invention presented below, reference is made to the accompanying drawings, in which:
Figure 1 is a block diagram of a computer system and various media used by the system;
Figure 2 is a data structure diagram of a computer executable file according to the present invention;
Figure 3 is a flowchart illustrating a first embodiment method of creating a file according to the present invention;
Figures 4(a)-4(d) are screen displays generated during the method illustrated in Figure 3;
Figure 5 is a flowchart illustrating a second embodiment method of creating a file according to the present invention; and
Figure 6 is a flowchart of executing a file according to the present invention.

### DESCRIPTION OF THE PREFERRED EMBODIMENTS

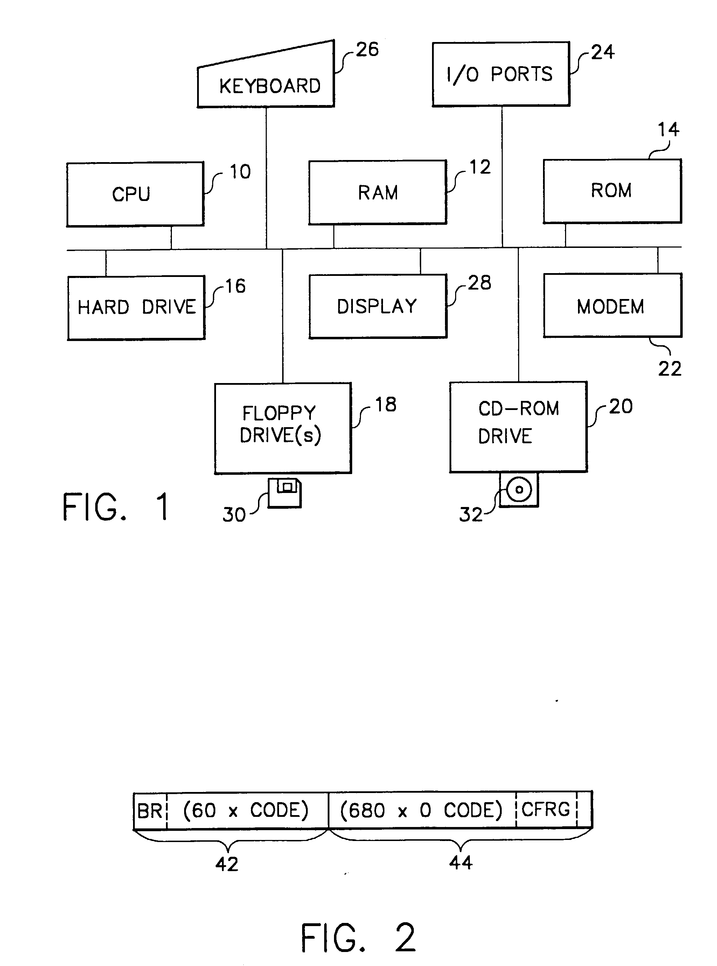

A block diagram is provided in Figure 1 depicting a conventional computer system. Any of the computer systems which would execute a computer executable file according to the present invention would typically include most of the components illustrated in Figure 1. The processor or CPU 10 and random access memory (RAM) 12 are included in virtually all computers. Almost all computers also include a read only memory (ROM) 14. Virtually all personal computers built in the last few years also include a hard drive 16 and most include one or more floppy drive(s) 18. It is becoming increasingly more common for at least nonportable personal computers to include a CD-ROM drive 20. Many if not most personal computers also include a modem 22 for communication with other computers via a serial communication line, particularly telephone lines. Other I/O ports 24 are provided for communication with other devices, e.g., printer(s) and pointing device(s), such as a mouse or a track ball (not shown). A personal computer will also include some type of keyboard 26 and display 28 for communication with a human operator.

Examples of media used in the floppy drive(s) 18 and CD-ROM drive 20 are illustrated in Figure 1. The most commonly used magnetic disks today are probably 3.5 inch floppy disks, such as floppy disk 30. An example of a CD-ROM 32 is also illustrated in Figure 1. A computer executable file according to the present invention may be stored on either of these types of media, or any other media, including the magnetic disks in the hard drive 16. The file can also be transmitted over the modem 22 or via the I/O ports 24 to other computers, e.g., via a network.

As described in the publication Inside Macintosh--Power PC System Software, the operating system of MACINTOSH computers with a 60x (PowerPC) processor can execute both 680x0 and 60x applications. This is possible because files created on APPLE MACINTOSH systems include an initial portion or data fork 42 and a subsequent portion or resource fork 44 which follows the initial portion 42. An application or program for a 680x0 processor contains program code only in the resource fork 44. Therefore, all APPLE MACINTOSH operating systems, including PowerPC MACINTOSH operating systems, look first to the resource fork 44 and execute the program found there, unless there is a code fragment resource (type "cfrg") in the resource fork 44, in which case the file contains a 60x application and the program code is obtained at a location identified by the "cfrg" resource. Ordinarily the program code and data are obtained from the data fork 42. However, it is possible for data to be located in either the data fork 42 or resource fork 44 of a file containing a 60x program, as described below.

It is also possible to create applications that contain both 60x and 680x0 executable code in a single file. These are termed "fat applications" which have the structure illustrated in Figure 2. The segment labeled BR in Figure 2 may contain data or may be part of the 60x code. The Process Manager on MACINTOSH computers with a 680x0 processor ignores the "cfrg" resource and executes the 680x0 code. The Process Manager of the operating system on PowerPC processor-based MACINTOSH computers reads the "cfrg" resource and uses the code in the specified location, typically the data fork 42.

Fat applications can be used to solve the problems discussed above relating to different processors on MACINTOSH computers, but do not provide the ability to execute the contents of a file on non-MACINTOSH computers. This is made possible by creating an accelerated PowerPC code resource. This resource is moved to the resource fork 44, accompanied with removal of the "cfrg" resource. The resource fork 44 may also contain 680x0 code, to enable the file to be executable by either 60x processors or 680x0 processors, or only 60x code may be present, if it is not desired to include the ability to execute the file on 680x0-based MACINTOSH computers.

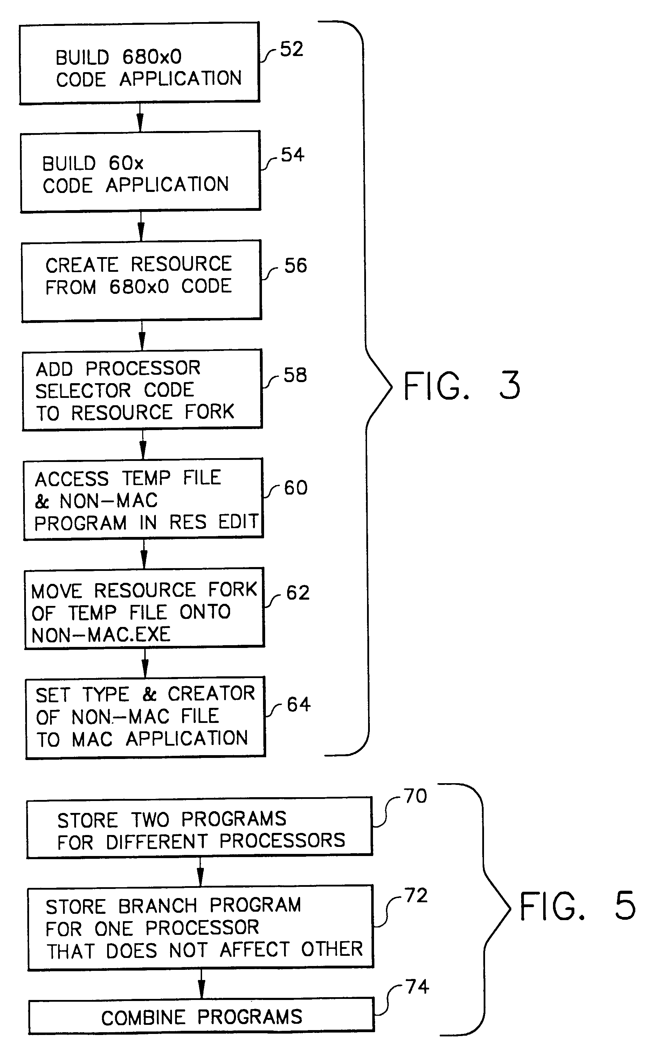

By creating an accelerated PowerPC code resource located in the resource fork 44, the data fork 42 of the file is made available for a program written for a non-MACINTOSH computer. The procedure for building a fat resource and moving the 60x code into the resource fork as an accelerated PowerPC code resource is provided in the Appendix and illustrated in Figure 3. First, the 680x0 code is built 52 and stored in a file named 68KCodeRes.rsrc in a conventional manner. Then, the 60x code is built 54 and stored in PCDCoderes.pef in a conventional manner.

Next, the routine PPCBuild.ts in the Appendix is executed to combine the output of the two conventional build operations. The seventeenth line on page 2 of the PPCBuild.ts routine converts 56 the output of the 60x build operation from the preferred executable format ("pef" extension) data file into a resource by executing the routine PEFRezFromData.r in the Appendix. This appends the 60x code generated in step 54 to the resource fork of the resource created in step 52.

Next, processor selector code is inserted 58 into the resource fork by executing the routine named PCDTK.r in the Appendix. The last four long lines of PCDTK.r creates a resource called "CODE" containing the 680x0 and 60x code resources, respectively. As indicated by the comments, the first two of these lines are universal procedure pointers to the 680x0 and 60x code which are defined as resource containers in the following two lines. The result of the operations in steps 52, 54, 56 and 58 is a temporary file which has an empty data fork and a resource fork containing all of the resources for both the 680x0 and 60x applications and pointers to each. As described in more detail below, this file can be executed on either a 680x0-based MACINTOSH or a 60x-based (PowerPC) MACINTOSH, due to the way that their operating systems handle files with a resource fork containing these pointers and resources.

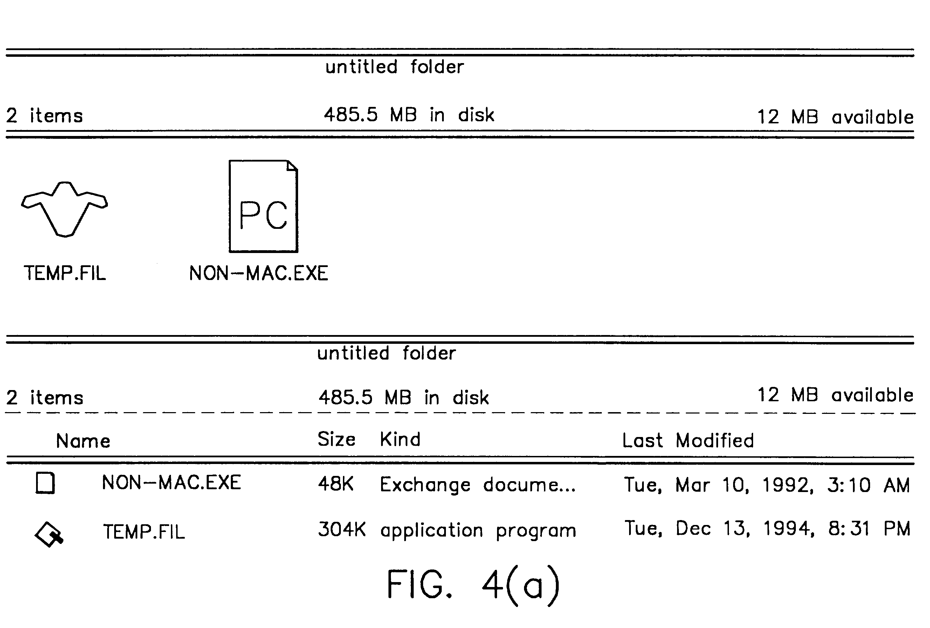

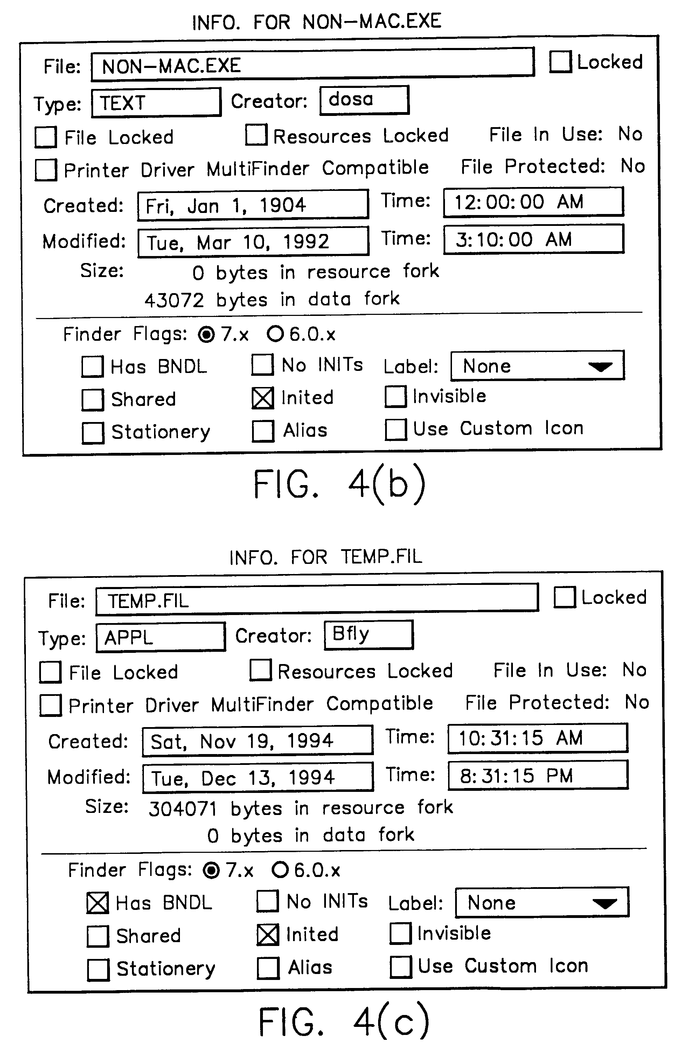

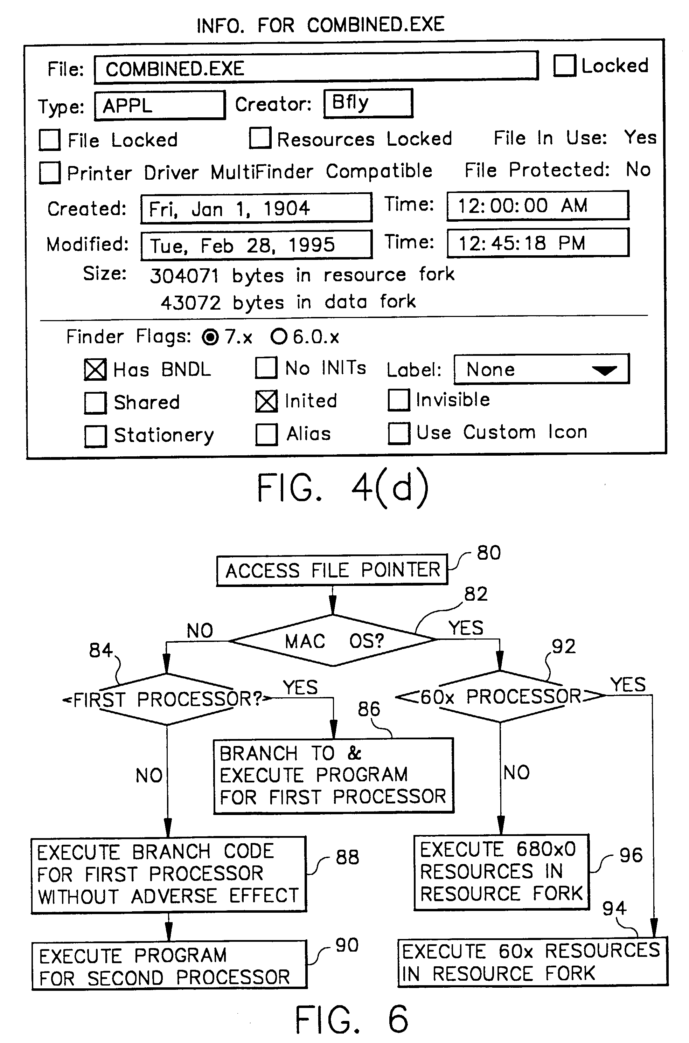

In the preferred embodiment the number of processors capable of executing the file is increased by continuing with the following blocks in the flowchart illustrated in Figure 3. These operations are preferably performed on a MACINTOSH system which is able to access both the temporary file with the empty data fork created in step 58 and a program from another computer system which is identified in Figure 4(a) as NON-MAC.EXE. These files are concurrently accessed 60 by a MACINTOSH tool known as a resource editor (ResEdit). In PPCBuild.ts following the two lines beginning with "Rez" is a comment describing how to invoke the resource editor to automatically perform the manual operations described below.

When the NON-MAC.EXE file and the temporary file resulting from step 58 are combined manually using the resource editor, display screens will be produced on display 28 (Figure 1) like those illustrated in Figures 4(b) and 4(c). The resource editor can be used to move 62 the contents of the resource fork in the temporary file resulting from step 58 into the resource fork of the NON-MAC.EXE file to produce the file COMBINED.EXE. As illustrated in Figure 4(d), the type and creator information is changed 64 from that of NON-MAC.EXE to match that of the temporary file resulting from step 58, so that the file will be recognized as executable on a MACINTOSH, while the "EXE" extension enables the file to be recognized as executable on an IBM PC.
Alternatively, the contents of NON-MAC.EXE could be moved into the data fork of the temporary file which would then have to be renamed with a "EXE" extension, but the type and creator would not have to change.

Above, the process of combining 680x0 code and 60x code was described as being performed automatically. However, it is also possible to use the resource editor to manually move 60x code into the resource fork in a manner similar to that described above for the non-MACINTOSH program.

A multi-architecture executable file according to the present invention is not limited to the embodiments described above. It is also possible to combine two programs for different processors in a single file, without relying upon the features provided by the operating systems and resource editors used in MACINTOSH personal computers. For example, such a file may be produced for one of the processors used in SUN workstations and an INTEL 8x86 processor used in an IBM PC. The resulting file may be distributed by itself for use on these two computer systems or inserted into the data fork as the NON-MAC.EXE file, as described above, so that the resulting file can execute on all MACINTOSH computers, all IBM PC computers and at least one processor/operating system combination of a SUN workstation.

A multi-architecture executable file for non-MACINTOSH computers according to the present invention is formed according to the steps in the flowchart illustrated in Figure 5. First, the programs for each of the processors are created and then stored 70 in a location accessible from a single computer system. Any known method may be used for this purpose as discussed above. The key to making a non-MACINTOSH multi-architecture executable file is the inclusion of a branch program for one processor which when executed by the other processor does not have any undesired effects on that processor. Such a program can be created by comparing all of the file formats and branching commands in binary or comparable codes for one processor with the instructions set of the other processor. When a series of codes are found capable of causing the first processor to branch to a location and which do not have an adverse effect on the second processor, the series of codes are stored 72 as a branch program. The branch program is then combined 74 with the programs desired to be executed on the first and second processors in a conventional manner using concatenation on the computer system having access to all of the programs. If necessary, the process of combining includes editing the resulting file, so that the series of codes causing branching result in the first processor branching to the program written for it.

As a result, the branching program is operating system independent, because it is unnecessary for the operating system to identify the type of processor, as is the case for 680x0 and 60x programs in the resource fork of a single file, as described above. Furthermore, no special hardware or emulation is required, as is often used in the prior art to enable a file to be executed on computer systems having different processors.

If the file produced in step 74 is inserted as the non-MACINTOSH file into the data fork of the file created as described above, the steps in the flowchart illustrated in Figure 6 will be performed when the resulting file is executed. First, as in any operating system, the directory is accessed 80 to obtain a pointer to the file. As described above, when this operation is performed on a MACINTOSH operating system, the first pointer used points to the resources fork of the file. This is represented in Figure 6 by decision block 82. In a non-MACINTOSH operating system, the pointer will point to an initial portion of the multi-architecture computer file, as in the case of a SUN workstation or an IBM PC.

Regardless of whether a non-MACINTOSH file resulting from step 74 is combined with a MACINTOSH file resulting from step 66 or not, when the file is executed on a non-MACINTOSH system, processing will begin at the beginning of the file. If the file is executed by the "first" processor which recognizes the branch command, as indicated at block 84 processing will branch to and execute 86 the program for the first processor. When the processor executing the file is a second processor which does not recognize that the branch instruction is a branch instruction, the branch code for the first processor will be executed 88 without any adverse affect and then the program for the second processor will be executed 90.

As discussed above, the MACINTOSH operating system is designed to handle both 60x programs and 680x0 programs in a single file. As indicated in decision block 92, the 60x processor recognizes that the "cfrg" resource is not present and executes 94 the resources in the resource fork. The first resource executed is a processor selector or trap which is an illegal instruction on both 680x0 and 60x processors. The MACINTOSH operation system responds to execution of the trap by placing information on the processor stack identifying the type of processor executing the instruction. The processor uses this information to select 92 the appropriate pointer stored in the resource fork and execute 94 or 96 the program in the resources to which the pointer points.

The many features and advantages of the invention are apparent from the detailed specification and, thus, it is intended by the appended claims to cover all such features and advantages of the invention which fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

### Reference Number List

- 10: CPU
- 12: RAM
- 14: ROM
- 16: Hard drive
- 18: Floppy drive(s)
- 20: CD-ROM drive
- 22: Modem
- 24: I/O ports
- 26: Keyboard
- 28: Display
- 30: Floppy disk
- 32: CD-ROM
- 42: Data fork
- 44: Resource fork
- 52: Build 680x0 code application
- 54: Build 60x code application
- 56: Create resource from 680x0 code
- 58: Insert processor selector code into resource fork of temporary file
- 60: Access temporary file & non-MAC file in ResEdit
- 62: Move resource fork of temporary file into NON-MAC.EXE
- 64: Set type & creator of non-MAC file to MAC application file
- 70: Store two programs for different processors
- 72: Store branch program for one processor that does not affect other
- 74: Combine programs
- 80: Access file pointer
- 82: MAC OS?
- 84: First processor?
- 86: Branch to & execute program for first processor
- 88: Execute branch code for first processor without adverse effect
- 90: Execute program for second processor
- 92: 60x Processor?
- 94: Execute resources pointed to by "cfrg" resource
- 96: Execute resources in resource fork ignoring resources pointed to by "cfrg" resourc

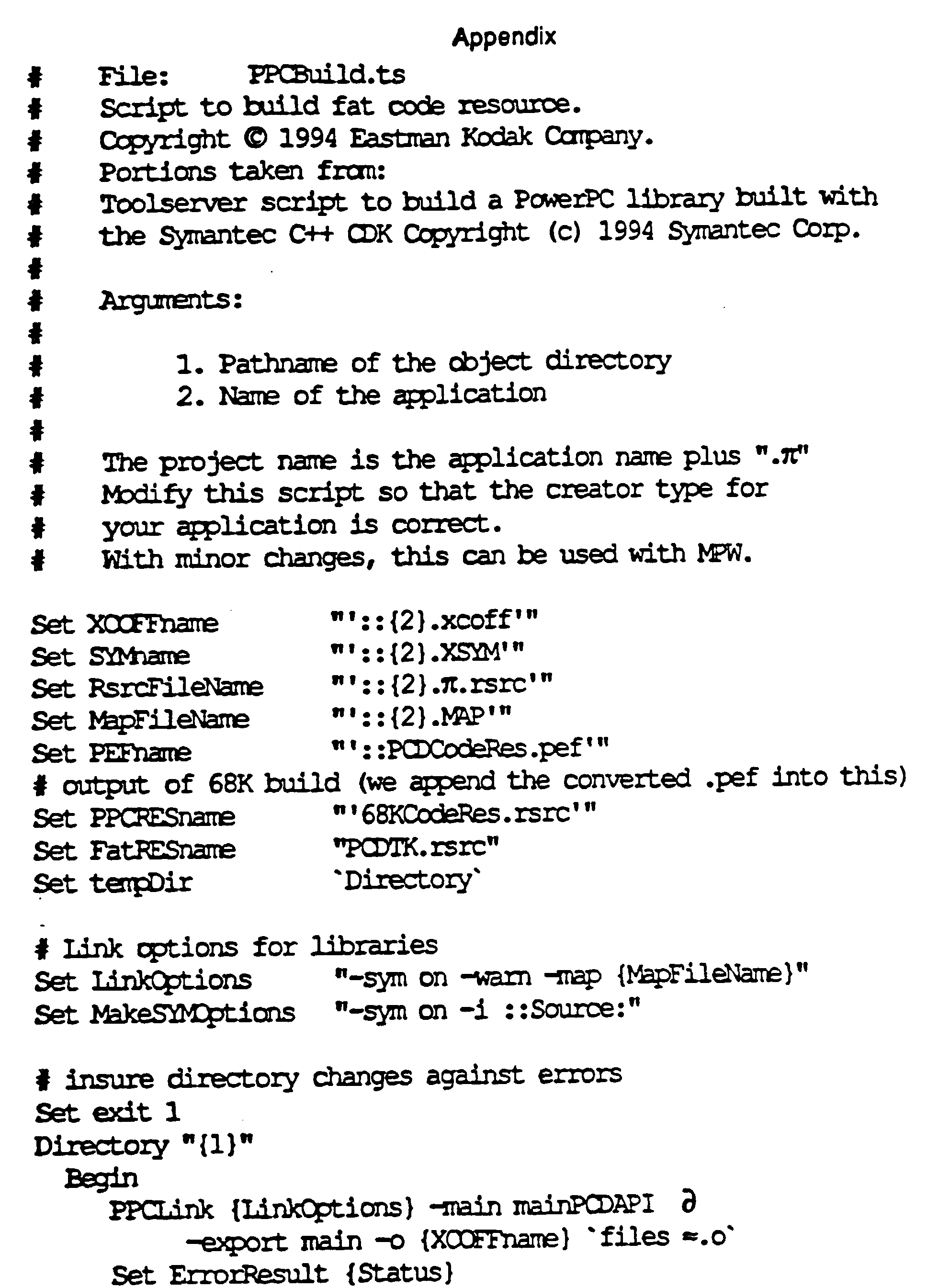

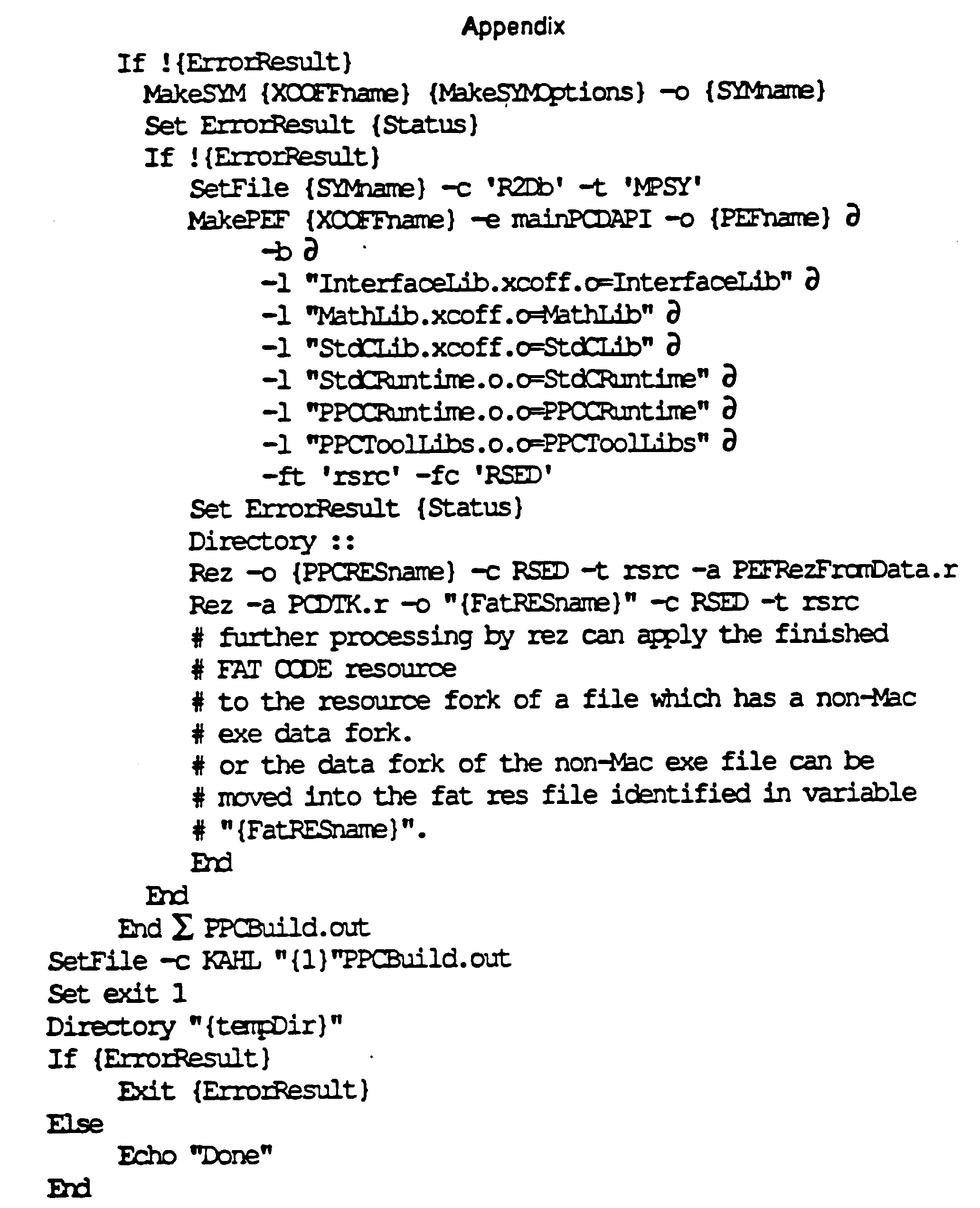

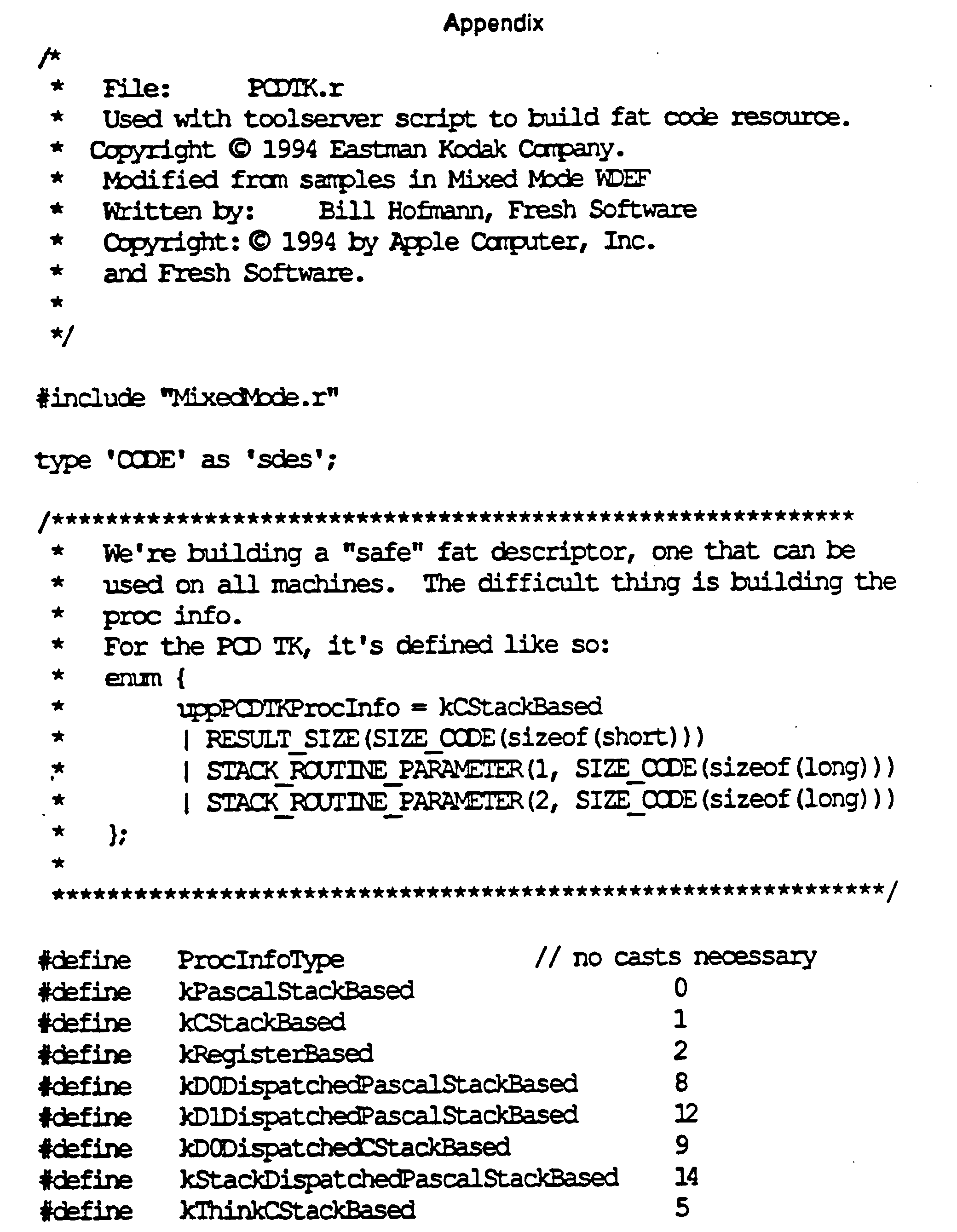

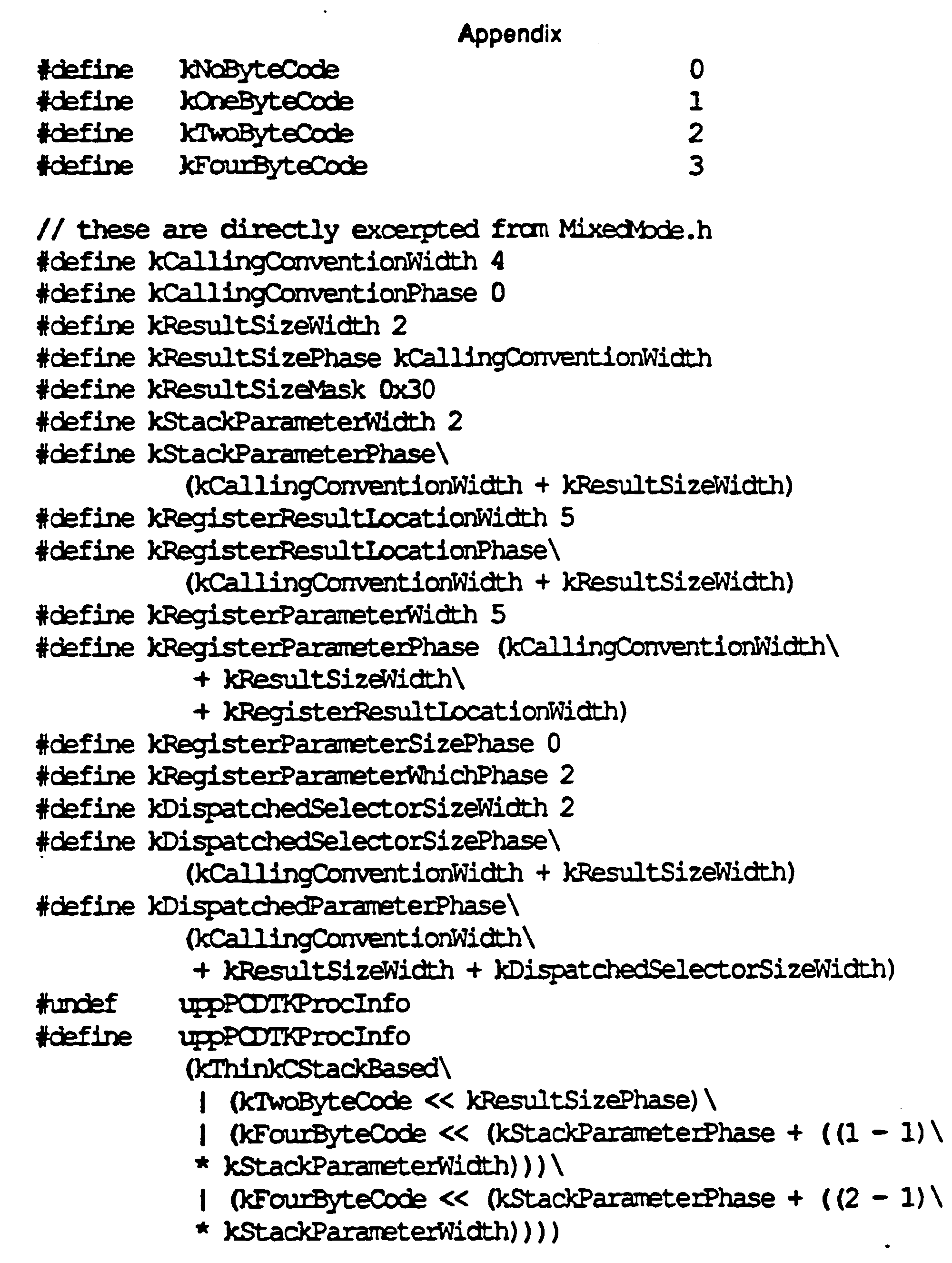

## Claims

1. A single computer executable file and associated directory entry, for execution by first and second processors, different from each other, operating under control of first and second operating systems, respectively, each accessing files differently, comprising:
a first program in said single computer executable file, said first program executable by the first processor under control of the first operating system;
a second program in said single computer executable file, said second program executable by the second processor under control of the second operating system; and
a program locator to cause the first processor to execute said first program and the second processor to execute said second program.

2. A single computer executable file and associated directory entry as recited in claim 1, wherein at least one of the first and second processors is unable to execute programs executable on the other processor without using emulation, and
wherein said program locator is an operating system independent branching program preceding said first and second programs in said single computer executable file, said branching program executable by the first processor to branch to said first program and by the second processor to result in execution of said second program.

3. A single computer executable file and associated directory entry as recited in claim 2, wherein the first operating system creates said directory entry with a pointer to said first program and the second operating system ignores the pointer, and
wherein said program locator is the pointer in said directory entry.

4. A single computer executable file and associated directory entry as recited in claim 1, wherein said program locator precedes said first and second programs in said single computer executable file, is executable by the first processor, when said single computer executable file is initially executed, to branch to said first program and is executable by the second processor to non-branching perform operations having no adverse effect on operation of the second processor.

5. A single computer executable file for execution by first and second processors, different from each other, operating under control of first and second operating systems, respectively, comprising:
a first program executable by the first processor under control of the first operating system;
a second program executable by the second processor under control of the second operating system; and
a branching program, preceding the first and second programs, executable by the second processor to branch to the second program and executable without branching by the first processor to cause execution of the first program without adverse effects.

6. A method of creating a multi-architecture computer file executable on first and second processors operating under first and second operating systems different from each other, the second operating system accessing a subsequent portion of any executable files prior to an initial portion thereof, said method comprising the steps of:
(a) storing a first program in a first file, the first program executable by the first processor under control of the first operating system;
(b) storing a second program in a second file, the second program executable by the second processor under control of the second operating system and the second file including initial and subsequent portions, each containing segments of the second program;
(c) moving all segments of the second program in the initial portion of the second file into the subsequent portion of the second file; and
(d) moving the first program from the first file into the initial portion of the second file.

7. A method of creating a multi-architecture computer file as recited in claim 6, wherein said storing in step (b) comprises the step of storing, by the second operating system, pointers to the initial and subsequent portions of the second file, respectively, the second processor executing the subsequent portion of the second file prior to the initial portion thereof by using the pointer to the subsequent portion.

8. A method of executing a multi-architecture computer file executable on first and second computer systems operating under first and second operating systems different from each other, said method comprising the steps of:
(a) accessing at least one pointer to at least one portion of the multi-architecture computer file when the multi-architecture computer file is executed on either of the first and second computer systems;
(b) supplying via the first operating system the pointer to an initial portion of the multi-architecture computer file accessed in step (a), when the multi-architecture computer file is executed on the first computer system;
(c) supplying via the second operating system, the pointer to a subsequent portion of the multi-architecture computer file when the multi-architecture computer file is executed on the second computer system;
(d) executing the initial portion of the multi-architecture computer file when the multi-architecture computer file is executed on the first computer system; and
(e) executing the subsequent portion of the multi-architecture computer file when the multi-architecture computer file is executed on the second computer system.

9. A method of executing a multi-architecture computer file executable on first and second processors in first and second computer systems operating under first and second operating systems, respectively, the first operating system being different from the second operating system, said method comprising the steps of:
(a) executing an initial segment of the multi-architecture computer file when the multi-architecture computer file is executed by either of the first and second processors, the initial segment including a branch command for the first processor;
(b) branching to and then executing a first program in the multi-architecture computer file when the branch command is executed by the first processor, the first program executable by the first processor;
(c) performing operations having no adverse effect on operation of the second processor when the branch command is executed by the second processor; and
(d) executing a second program in the multi-architecture computer file after said performing of step (c), the second program executable by the second processor.

10. A disk storing computer readable information, comprising:
at least one executable computer file, said at least one executable computer file including
a first program executable by a first processor under control of a first operating system;
a second program executable by a second processor under control of a second operating system different from the first operating system; and
a branching program, preceding said first and second programs in said at least one executable computer file, executable by the first processor to branch to said first program and executable without branching by the second processor to cause execution of said second program without adverse effects.
